# EUROPEAN PATENT APPLICATION

(11) **EP 2 696 512 A1**
(43) Date of publication of application: **12.02.2014**
(21) Application number: 12179958.9
(22) Date of filing: 09.08.2012
(51) Int. Cl.: H04B 3/56

(54) **System for coupling a power line communication device to a power line network**

(71) Applicant: Sigma Designs Israel S.D.I Ltd., 69710 Tel-Aviv (IL)
(72) Inventor: Weiss, Uri, 46362 Herzliya (IL)
(74) Representative: Carvajal y Urquijo, Isabel

(57) **Abstract**

Coupling circuit for coupling a power line communication device to a power line network, including a first network port, a second network port, a third network port, a first modem port, a second modem port, a third modem port, a fourth modem port, a first transformer, a second transformer, a third transformer and at least two capacitors, the first transformer including a first network side winding including two terminals, a first modem side transmitter winding including two terminals, a first modem side receiver winding including two terminals and a center tap, extending from a midpoint between the two terminals of the first network side winding, the second transformer including a second network side winding including two terminals and a second modem side receiver winding including two terminals, the third transformer including a third network side winding including two terminals and a second modem side transmitter winding including two terminals.

## Description

### FIELD OF THE DISCLOSED TECHNIQUE

The disclosed technique relates to power line communication, in general, and to methods and systems for inductively coupling a power line communication modem to a power line network so that the phase-neutral interface as well as the neutral-ground interface of the power line network are balanced, in particular.

### BACKGROUND OF THE DISCLOSED TECHNIQUE

Power line communication (herein abbreviated PLC) refers to systems for enabling data to be transferred over electrical cables. PLC is also referred to in the art as a power line digital subscriber line, a power line carrier, mains communication, power line telecom and power line networking. Electrical cables can also be referred to as power cables, power lines, electrical power lines, electrical wiring, electrical cabling and the like. These terms are used interchangeably herein and represent the cabling used to transfer electricity from an electricity provider, such as an electric company (e.g. Pacific Gas & Electric, Florida Power & Light, etc...) or an electricity generator (e.g., a wind energy converter), to a residence, as well as the wires used in a residence to transfer electricity to various wall sockets, electrical outlets, wall plugs and power points in the residence.

PLC enables various electrical devices, such as computers, printers, televisions and other electrical devices in a residence, to be coupled with one another as a network without the need for new wires to be added to the residence. A residence can refer to a private home, an apartment building, an office building or other structures where people live that receive electricity. In effect, the electric cabling forms the backbone of a power line network or a PLC network. Each electrical device to be coupled in the network requires a separate communication device for enabling it to transfer data over the electrical wiring. Such a communication device is usually referred to as a modem, and commonly referred to in the art as a power line modem. Such modems usually transfer data in a high frequency range, such as on the order of megahertz or higher. PLC systems and methods are known in the art.

Traditionally, power lines and their associated networks were designed for providing electricity and not for the purposes of communication and were thus not designed to provide an optimal medium for transferring data. Power line networks suffer from high levels of noise, which distorts and interferes with communication signals. Noise in PLC networks can be defined as any undesirable voltage signal which travels along the power line network and which might be received as a communication signal in one of the power line modems coupled with the network. Common sources of noise are various household devices coupled to the power line network.

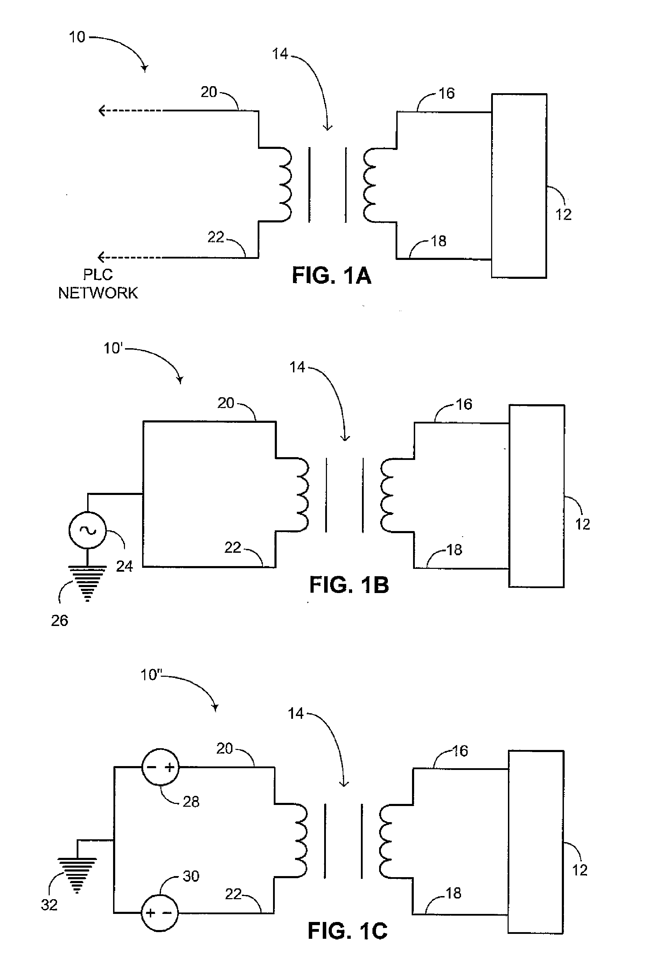

Reference is now made to Figure 1A, which is a schematic illustrations of a prior art system, generally referenced 10, for coupling a PLC communication device to a PLC network in a residence. With reference to Figure 1A, coupling system 10 includes a PLC device 12 and a transformer 14. PLC device 12 may be a PLC modem. Transformer 14 inductively couples PLC device 12 to the PLC network (not shown). In particular a modem first line 16 and a modem second line 18 are coupled with a first winding (not referenced) of transformer 14. Network phase line 20 and network neutral line 22 are coupled with a second winding (not referenced) of transformer 14. Network phase line 20 refers to the phase line (or active line) in the residence, whereas network neutral line 22 refers to the neutral line in the residence. Together, network phase line 20 and network neutral line 22 define a network phase-neutral (herein abbreviated PN) interface (not referenced). Modem first line 16 and modem second line 18 define a modem PN interface (not referenced), which is inductively coupled with the network PN interface through transformer 14.

The noise in PLC networks can be classified into two main categories, common mode (herein abbreviated CM) noise and differential mode (herein abbreviated DM) noise. CM noise is a signal which is referenced to the ground wire in a PLC network and which is injected simultaneously with the same polarity to two different lines in a PLC network. Hence, CM noise can affect two or more elements of a PLC network in a similar manner. DM noise is a signal which is injected simultaneously with opposing polarities to two different lines in a PLC network. Models are known in the art for modeling CM noise and DM noise in PLC networks, as shown in Figures 1B and 1C respectively. In Figure 1B, CM noise is modeled and filtered out by the transformer. In Figure 1C, DM noise is modeled and is not filtered out by the transformer.

Reference is now made to Figures 1B and 1C, which are schematic illustrations of noise models in PLC networks, generally referenced 10' and 10", as is known in the prior art. It is noted that equivalent elements in Figures 1A-1C are referenced using identical numbering. With reference to Figure 1B, coupling system 10' includes all the elements of the coupling system shown in Figure 1A. Coupling system 10' further includes an equivalent CM noise voltage source 24 and a ground terminal 26 for modeling the interaction of CM noise with a PLC network (not shown) on the network PN interface. Voltage source 24 is coupled with both network phase line 20 and with network neutral line 22. Voltage source 24 produces CM noise signals on both network phase line 20 and on network neutral line 22. In the ideal case, this results in zero CM noise signals on the modem PN interface, as the noise is filtered out by transformer 14 on the modem PN interface side (not referenced).

A balanced interface is an interface consisting of two similar ports (or lines), each having substantially similar impedance relative to ground (i.e., ground impedance). For example, in Figure 1B, the network PN interface is, in theory, a balanced interface as the CM noise signals produced by voltage source 24 cancel out each other at transformer 14 and are not reflected to PLC device 12. It is noted that CM noise signals are often produced by household devices coupled with the power line network or are produced internally by devices of the PLC network, such as the power supply (not shown) of PLC device 12, which is coupled with the primary winding (not referenced) of transformer 14.

With reference to Figure 1C, coupling system 10" includes all the elements of the coupling system shown in Figure 1A. Coupling system 10" also includes a pair of voltage sources 28 and 30 and a ground terminal 32 for modeling the interaction of DM noise with a PLC network (not shown). Voltage source 28 is coupled between ground terminal 32 and network phase line 20. Voltage source 30 is coupled between ground terminal 32 and network neutral line 22. Pair of voltage sources 28 and 30 are similar in power but are opposite in polarity, as is shown in Figure 1C (i.e., the polarity of voltage source 28 is opposite that of voltage source 30). Pair of voltage sources 28 and 30 produce a DM noise signal on the network PN interface. In particular, voltage source 28 produces a first portion of the DM noise signal on network phase line 20. Voltage source 30 produces a second portion of the DM noise signal, which is opposite in amplitude to the first portion of the DM noise signal, on network neutral line 22. Transformer 14 induces the DM noise signal into PLC device 12. Thus, the DM noise signal is not filtered out by transformer 14. It is noted that the main source for DM noise signals in a PLC network is the communication signal itself. Additionally, other noise sources in the electrical system of the residence may also generate a DM noise component.

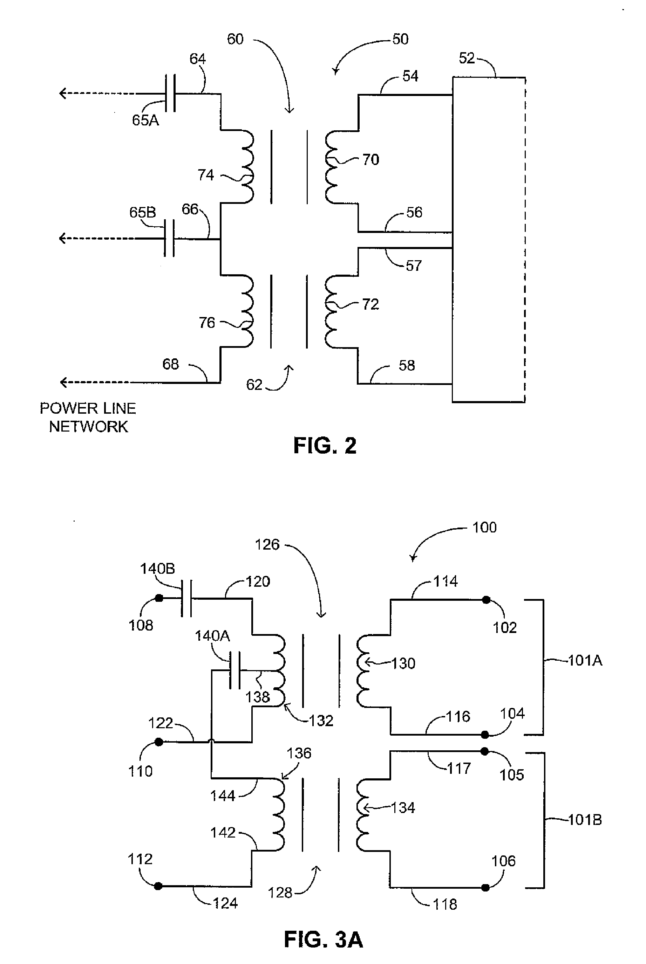

Reference is now made to Figure 2, which is a schematic illustration of a coupling system, generally referenced 50, for inductively coupling a communication device to a power line network, as is known in the art. Coupling system 50 includes a communication device 52, a first transformer 60 and a second transformer 62. Communication device 52 will be referred to herein as modem 52. The communication section (not referenced) of modem 52 is coupled with first transformer 60 and second transformer 62. It is noted that even though modem 52 is employed as both a transmitter and a receiver for the electrical device, the example set forth with reference to Figure 2 details the receiver functionality of modem 52. The communication section of modem 52 is coupled with a first winding 70 of first transformer 60 (i.e., a modem side winding) through a first modem line 54 and a second modem line 56. The communication section of modem 52 is also coupled with a first winding 72 of second transformer 62 through a third modem line 57 and a fourth modem line 58.

A phase line 64 and a neutral line 66 of the PLC network (not referenced) are coupled with a second winding 74 of first transformer 60 (i.e., a network side winding). Each of phase line 64 and neutral line 66 includes a respective capacitor 65A and 65B for safety purposes. Neutral line 66 and a ground line 68 of the PLC network are coupled with a second winding 76 of second transformer 62. Phase line 64 and neutral line 66 define a network PN interface (not referenced). Neutral line 66 and ground line 68 define a network ground-neutral (herein abbreviated NG) interface (not referenced). First modem line 54 and second modem line 56 together define a modem PN interface, which is inductively coupled with the network PN interface through first transformer 60. Third modem line 57 and fourth modem line 58 define a modem NG interface, which is inductively coupled with the network NG interface through second transformer 62.

Phase line 64 and neutral line 66 are employed for delivering power through the power line network. Phase line 64 is also referred to as an active line or a live line. Ground line 68 is employed for safety purposes. Coupling system 50 inductively couples modem 52 to the power line network through first and second transformers 60 and 62 respectively. Modem 52 is a communication device for transmitting and receiving communication signals to and from other communication devices in the PLC network, such as other PLC modems (not shown) coupled with other electrical devices (not shown) in the residence. For example, a remote PLC modem (not shown) transmits a modulated signal through the PLC network and specifically through coupling system 50 to modem 52. In a similar manner, modem 52 can transmit a modulated signal to the remote PLC modem through coupling system 50 and through the PLC network.

As can be seen in Figure 2, the network PN interface is not balanced. Put another way, the ground impedance of phase line 64 is different than that of neutral line 66, since the ground impedance of phase line 64 includes a summation of the impedances of both first transformer 60 and second transformer 62 whereas the ground impedance of neutral line 66 includes only the impedance of second transformer 62. It is noted that the impedance of each of first transformer 60 and second transformer 62 is dependent at least on the impedance of the modem PN interface and the modem NG interface, respectively. Due to the lack of symmetry between the ground impedance of phase line 64 and of neutral line 66, CM noise signals (not shown) on the network PN interface do not fully cancel each other out on first transformer 60.

### SUMMARY OF THE PRESENT DISCLOSED TECHNIQUE

It is an object of the disclosed technique to provide a novel system for inductively coupling a PLC modem to a power line network so that a first receive and transmit interface as well as a second receive and transmit interface of the PLC network is balanced. In accordance with the disclosed technique, there is thus provided a coupling circuit for coupling a power line communication device to a power line network, including a first network port, a second network port, a third network port, a first differential modem port, a second differential modem port, a third differential modem port, a fourth differential modem port, a first transformer, a second transformer, a third transformer and at least two capacitors. The first network port is coupled with a first network line, the second network port is coupled with a second network line and the third network port is coupled with a third network line. The first transformer including a first network side winding including two terminals, a first modem side transmitter (TX) winding including two terminals, a first modem side receiver (RX) winding including two terminals and a center tap, extending from a midpoint between the two terminals of the first network side winding. The first modem side TX winding being coupled with the first differential modem port, the first modem side RX winding being coupled with the second differential modem port, a first one of the two terminals of the first network side winding being coupled with the first network line and a second one of the two terminals of the first network side winding being coupled with the second network line. The second transformer includes a second network side winding including two terminals, and a second modem side RX winding including two terminals. The second modem side RX winding is coupled with the fourth differential modem port, a first one of the two terminals of the second network side winding is coupled with the center tap and a second one of the two terminals of the second network side winding is coupled with the third network line. The third transformer includes a third network side winding including two terminals and a second modem side TX winding including two terminals. The second modem side TX winding is coupled with the third differential modem port, a first one of the two terminals of the third network side winding is coupled with the second network line and a second one of the two terminals of the third network side winding is coupled with the third network line. In accordance with another embodiment of the disclosed technique, there is thus provided a power line communication device including a coupling circuit as described above.

In accordance with a further embodiment of the disclosed technique, there is thus provided a coupling circuit for coupling a power line communication device to a power line network, including a first network port, a second network port, a third network port, a first differential modem port, a second differential modem port, a third differential modem port, a fourth differential modem port, a first transformer, a second transformer, a third transformer and at least two capacitors. The first network port is coupled with a first network line, the second network port is coupled with a second network line and the third network port is coupled with a third network line. The first transformer includes a first network side winding including two terminals, a first modem side winding including two terminals and a center tap, extending from a midpoint between the two terminals of the first network side winding. The first modem side winding is coupled with the first differential modem port and with the second differential modem port, a first one of the two terminals of the first network side winding is coupled with the first network line and a second one of the two terminals of the first network side winding is coupled with the second network line, wherein one of the first and second differential modem ports is for transmitting at least one signal over the power line network and wherein the other one of the first and second differential modem ports is for receiving the signal over the power line network. The second transformer includes a second network side winding including two terminals and a second modem side receiver (RX) winding including two terminals. The second modem side RX winding is coupled with the fourth differential modem port, a first one of the two terminals of the second network side winding is coupled with the center tap and a second one of the two terminals of the second network side winding is coupled with the third network line. The third transformer includes a third network side winding including two terminals and a second modem side transmitter (TX) winding including two terminals. The second modem side TX winding is coupled with the third differential modem port, a first one of the two terminals of the third network side winding is coupled with the second network line and a second one of the two terminals of the third network side winding is coupled with the third network line.

In accordance with another embodiment of the disclosed technique, there is thus provided a coupling circuit for coupling a power line communication device to a power line network including a first network port, a second network port, a third network port, a first differential modem port, a second differential modem port, a third differential modem port, a fourth differential modem port, a first transformer, a second transformer and at least two capacitors. The first network port is coupled with a first network line, the second network port is coupled with a second network line and the third network port is coupled with a third network line. The first transformer includes a first network side winding including two terminals, a first modem side transmitter (TX) winding including two terminals, a first modem side receiver (RX) winding including two terminals and a center tap, extending from a midpoint of the first network side winding. The first modem side TX winding is coupled with the first differential modem port, the first modem side RX winding is coupled with the second differential modem port, a first one of the two terminals of the first network side winding is coupled with the first network line and a second one of the two terminals of the first network side winding is coupled with the second network line. The second transformer includes a second network side winding including two terminals, a second modem side TX winding including two terminals and a second modem side RX winding including two terminals. The second modem side TX winding is coupled with the third differential modem port, the second modem side RX winding is coupled with the fourth differential modem port, a first one of the two terminals of the second network side winding is coupled with the center tap and a second one of the two terminals of the second network side winding is coupled with the third network line. The capacitors are coupled between at least any two of the midpoint of the first network side winding and the first one of the two terminals of the second network side winding, a first one of the two terminals of the first network side winding and the first network port, and a second one of the two terminals of the first network side winding and the second network port. In accordance with a further embodiment of the disclosed technique, there is thus provided a power line communication device including a coupling circuit as described above.

In accordance with another embodiment of the disclosed technique, there is thus provided a coupling circuit for coupling a power line communication device to a power line network including a first network port, a second network port, a third network port, a first differential modem port, a second differential modem port, a third differential modem port, a fourth differential modem port, a first transformer, a second transformer and at least two capacitors. The first network port is coupled with a first network line, the second network port is coupled with a second network line and the third network port is coupled with a third network line. The first transformer includes a first network side winding including two terminals, a first modem side winding including two terminals and a center tap, extending from a midpoint of the first network side winding. The first modem side winding is coupled with the first differential modem port and with the second differential modem port, a first one of the two terminals of the first network side winding is coupled with the first network line and a second one of the two terminals of the first network side winding is coupled with the second network line, wherein one of the first and second differential modem ports is for transmitting at least one signal over the power line network and wherein the other one of the first and second differential modem ports is for receiving the signal over the power line network. The second transformer includes a second network side winding including two terminals and a second modem side winding including two terminals. The second modem side winding is coupled with the third differential modem port and with the fourth differential modem port, a first one of the two terminals of the second network side winding is coupled with the center tap and a second one of the two terminals of the second network side winding is coupled with the third network line, wherein one of the third and fourth differential modem ports is for transmitting at least one signal over the power line network and wherein the other one of the third and fourth differential modem ports is for receiving the signal over the power line network. The capacitors are coupled between at least any two of the midpoint of the first network side winding and the first one of the two terminals of the second network side winding, a first one of the two terminals of the first network side winding and the first network port, and a second one of the two terminals of the first network side winding and the second network port.

In accordance with a further embodiment of the disclosed technique, there is thus provided a coupling circuit for coupling a power line communication device to a power line network including a first network port, a second network port, a third network port, a first differential modem port, a second differential modem port, a third differential modem port, a fourth differential modem port, a first transformer, a second transformer and at least two capacitors. The first network port is coupled with a first network line, the second network port is coupled with a second network line and the third network port is coupled with a third network line. The first transformer includes a first network side winding including two terminals, a first modem side winding including two terminals and a center tap, extending from a midpoint of the first network side winding. The first modem side winding is coupled with the first differential modem port and with the second differential modem port, a first one of the two terminals of the first network side winding is coupled with the first network line and a second one of the two terminals of the first network side winding is coupled with the second network line, wherein one of the first and second differential modem ports is for transmitting at least one signal over the power line network and wherein the other one of the first and second differential modem ports is for receiving the signal over the power line network. The second transformer includes a second network side winding including two terminals, a second modem side transmitter (TX) winding including two terminals and a second modem side receiver (RX) winding including two terminals. The second modem side TX winding is coupled with the third differential modem port, the second modem side RX winding is coupled with the fourth differential modem port, a first one of the two terminals of the second network side winding is coupled with the center tap and a second one of the two terminals of the second network side winding is coupled with the third network line. The capacitors are coupled between at least any two of the midpoint of the first network side winding and the first one of the two terminals of the second network side winding, a first one of the two terminals of the first network side winding and the first network port and a second one of the two terminals of the first network side winding and the second network port.

In accordance with another embodiment of the disclosed technique, there is thus provided a coupling circuit for coupling a power line communication device to a power line network including a first network port, a second network port, a third network port, a first differential modem port, a second differential modem port, a third differential modem port, a fourth differential modem port, a first transformer, a second transformer and at least two capacitors. The first network port is coupled with a first network line, the second network port is coupled with a second network line and the third network port is coupled with a third network line. The first transformer includes a first network side winding including two terminals, a first modem side transmitter (TX) winding including two terminals, a first modem side receiver (RX) winding including two terminals and a center tap, extending from a midpoint of the first network side winding. The first modem side TX winding is coupled with the first differential modem port, the first modem side RX winding is coupled with the second differential modem port, a first one of the two terminals of the first network side winding is coupled with the first network line and a second one of the two terminals of the first network side winding is coupled with the second network line. The second transformer includes a second network side winding including two terminals and a second modem side winding including two terminals. The second modem side winding is coupled with the third differential modem port and with the fourth differential modem port, a first one of the two terminals of the second network side winding is coupled with the center tap and a second one of the two terminals of the second network side winding is coupled with the third network line, wherein one of the third and fourth differential modem ports is for transmitting at least one signal over the power line network and wherein the other one of the third and fourth differential modem ports is for receiving the signal over the power line network. The capacitors are coupled between at least any two of the midpoint of the first network side winding and the first one of the two terminals of the second network side winding, a first one of the two terminals of the first network side winding and the first network port, and a second one of the two terminals of the first network side winding and the second network port.

### BRIEF DESCRIPTION OF THE DRAWINGS

The disclosed technique will be understood and appreciated more fully from the following detailed description taken in conjunction with the drawings in which:
Figure 1A is a schematic illustration of a prior art system for coupling a PLC communication device to a PLC network in a residence;
Figures 1B and 1C are schematic illustrations of noise models in PLC networks, as is known in the prior art;
Figure 2 is a schematic illustration of a coupling system for inductively coupling a communication device to a power line network, as is known in the art;
Figure 3A is a schematic illustration of a balanced coupling circuit for inductively coupling a PLC modem to a power line network, constructed and operative in accordance with an embodiment of the disclosed technique;
Figure 3B is a schematic illustration of another balanced coupling circuit for inductively coupling a PLC modem to a power line network, constructed and operative in accordance with another embodiment of the disclosed technique;
Figure 3C is a schematic illustration of a further balanced coupling circuit for inductively coupling a PLC modem to a power line network, constructed and operative in accordance with a further embodiment of the disclosed technique;
Figure 3D is a schematic illustration of an additional balanced coupling circuit for inductively coupling a PLC modem to a power line network, constructed and operative in accordance with another embodiment of the disclosed technique;
Figure 4A is a schematic illustration of a balanced coupling circuit for inductively coupling a PLC modem to a power line network including a transmitter section and a receiver section, constructed and operative in accordance with a further embodiment of the disclosed technique; and
Figure 4B is a schematic illustration of another balanced coupling circuit for inductively coupling a PLC modem to a power line network including a transmitter section and a receiver section, constructed and operative in accordance with another embodiment of the disclosed technique.

### DETAILED DESCRIPTION OF THE EMBODIMENTS

The disclosed technique overcomes the disadvantages of the prior art by providing a circuit for inductively coupling a PLC modem to a power line network such that the network PN interface of the PLC network is balanced. The balanced coupling circuit includes two differential modem ports, three network ports, two transformers and a center tap. Each of the differential modem ports is coupled with a respective transformer. Each of the network ports is coupled with a selected network line (i.e., a network phase line, a network neutral line and a network ground line). A first line of a first differential modem port and a second line of the first differential modem port are coupled with the terminals of the modem side winding of the first transformer. A first line of a second differential modem port and a second line of the second differential modem port are coupled with the terminals of the modem side winding of the second transformer. The first network port and the second network port are coupled with the terminals of the network side winding of the first transformer. The third network port is coupled with a first terminal of the network side winding of the second transformer. The center tap extends from the midpoint of the network side winding of the first transformer to a second terminal of the network side winding of the second transformer. Thus, the ground impedances of the first network port and the second network port are substantially similar. In this manner, an interface defined by the first network port and the second network port is balanced.

The disclosed technique also overcomes the disadvantages of the prior art by providing a circuit for inductively coupling a PLC modem to a power line network such that the network PN interface as well as the network NG interface of the PLC network are balanced. The balanced coupling circuit includes four differential modem ports, three network ports, three transformers, at least two capacitors and a center tap. Two of the differential modem ports are coupled with the first transformer, with one differential modem port acting as a transmitter over the PN interface and the other differential modem port acting as a receiver over the PN interface. The third differential modem port is coupled with the second transformer and acts as a receiver over the NG interface. The fourth differential modem port is coupled with the third transformer and acts as a transmitter over the NG interface. The first transformer includes a network side winding for receiving and transmitting signals. A first terminal of the network side winding is coupled with the first network port, while a second terminal of the network side winding is coupled with the second network port. The second transformer also includes a network side winding for receiving signals. A first terminal of the network side winding is coupled with the third network port, while a second terminal of the network side winding is coupled with a center tap of the first transformer. The center tap is located at a midpoint between the network side winding of the first transformer. The third transformer includes a network side winding for transmitting signals. A first terminal of the network side winding is coupled with the second network port, while a second terminal of the network side winding is coupled with the third network port.

Reference is now made to Figure 3A, which is a schematic illustration of a balanced coupling circuit, generally referenced 100, for inductively coupling a PLC modem to a power line network, constructed and operative in accordance with an embodiment of the disclosed technique. The balanced coupling circuit enables a network PN interface to be balanced. Balanced coupling circuit 100 includes a first differential modem port 101A, a second differential modem port 101B, a first network port 108, a second network port 110, a third network port 112, a first transformer line 114, a second transformer line 116, a third transformer line 117, a fourth transformer line 118, a first network line 120, a second network line 122, a third network line 124, a first transformer 126, a second transformer 128, a center tap 138, a center tap capacitor 140A and a first network line capacitor 140B. First differential modem port 101A includes a first terminal 102 and a second terminal 104. Second differential modem port 101B includes a third terminal 105 and a fourth terminal 106. It is noted that first differential modem port 101A and second differential modem port 101B are not coupled with one another. First transformer line 114 and second transformer line 116 extend from first terminal 102 and second terminal 104 respectively to the terminals (not referenced) of a modem side winding 130 of first transformer 126. Third transformer line 117 and fourth transformer line 118 extend from third terminal 105 and fourth terminal 106 respectively to the terminals (not referenced) of a modem side winding 134 of second transformer 128. First network line 120 and second network line 122 extend from first network port 108 and second network port 110 respectively to the terminals (not referenced) of a network side winding 132 of first transformer 126. Third network line 124 extends from third network port 112 to a first terminal 142 of a network side winding 136 of second transformer 128. Center tap 138 extends from the midpoint (not referenced) of network side winding 132 of first transformer 126 to a second terminal 144 of network side winding 136 of second transformer 128. Center tap capacitor 140A is coupled in between center tap 138 of network side winding 132 and second terminal 144 of network side winding 136. First network line capacitor 140B is coupled in between a first terminal (not referenced) of network side winding 132 of first transformer 126 and first network port 108. Center tap capacitor 140A and first network line capacitor 140B are installed for meeting safety regulations.

First terminal 102 and second terminal 104 form a pair of terminals in first differential modem port 101A. First transformer line 114 and first terminal 102 can represent, for example, a modem side phase line, if first network line 120 is a phase line. Second transformer line 116 and second terminal 104 can represent, for example, a modem side neutral line, if second network line 122 is a neutral line. Third terminal 105 and fourth terminal 106 form a pair of terminals in second differential modem port 101B. Fourth transformer line 118 and fourth terminal 106 can represent, for example, a modem side ground line, if third network line 124 is a ground line. Third transformer line 117 and third terminal 105 can represent, for example, a modem side phase-neutral line, if first network line 120 and second network line 122 are respectively a phase line and a neutral line. First network port 108 is coupled with a PLC network line, such as a PLC network phase line (not shown). Second network port 110 is coupled with a PLC network line, such as a PLC network neutral line (not shown). Third network port 112 is coupled with a PLC network line, such as a PLC network ground line (not shown). First terminal 102 and second terminal 104 together define a first modem communication interface (not referenced), such as a modem PN interface. Third terminal 105 and fourth terminal 106 together define a second modem communication interface (not referenced), such as a modem PNG interface. First network port 108 and second network port 110 together define a first network communication interface (not referenced), such as a network PN interface. Second network port 110 and third network port 112 together define a second network communication interface (not referenced), such as a network NG interface.

According to the disclosed technique, the first network communication interface is balanced as it consists of similar conducting lines, i.e. first network line 120 and second network line 122, having similar impedances along their length and having similar ground impedances. Thus any CM noise signals traveling through first network line 120 and second network line 122, i.e. CM noise signals traveling through the network PN interface, substantially cancel each other on network side winding 132 of first transformer 126. Network side winding 132 of first transformer 126 defines a first phase-neutral-ground (herein abbreviated PNG) communication channel. In particular, network side winding 132 is coupled with, either directly or indirectly, each of first network line 120 (e.g. a phase line), third network line 124 (e.g. a ground line) and second network line 122 (e.g. a neutral line). Network side winding 136 of second transformer 128 defines a second PNG communication channel. In particular, network side winding 136 is coupled with, either directly or indirectly, each of first network line 120, third network line 124 and second network line 122.

Hence, modem side winding 130 of first transformer 126 couples first differential modem port 101A of a PLC modem (not shown) to the first PN communication channel. Modem side winding 134 of second transformer 128 couples second differential modem port 101B of the modem to the second PNG communication channel. A signal received on first and second terminals 102 and 104 is a combination of the signals on the first and second network lines, e.g. the PN lines. In addition, a signal received on third and fourth terminals 105 and 106 is a combination of the signals on first, second and third network lines, e.g. the PNG lines. As a consequence, balanced coupling circuit 100 couples two different combinations of the PN and NG signals to the PLC modem instead of independently coupling the PN signal alone to one port on the PLC modem and the NG signal alone to another port of the PLC modem as is done in the prior art.

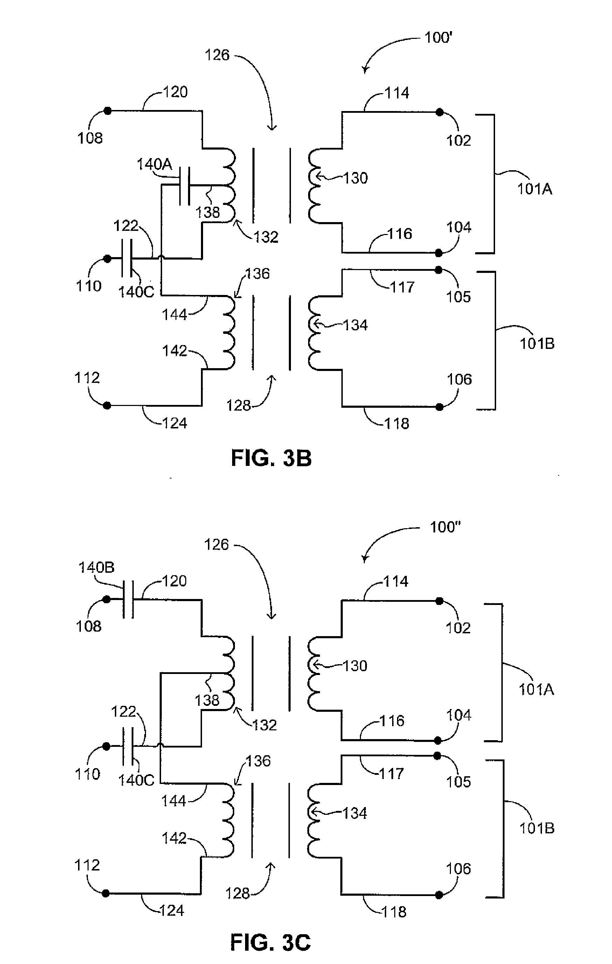

Reference is now made to Figure 3B, which is a schematic illustration of another balanced coupling circuit, generally referenced 100', for inductively coupling a PLC modem to a power line network, constructed and operative in accordance with another embodiment of the disclosed technique. Balanced coupling circuit 100' is substantially similar to balanced coupling circuit 100 (Figure 3A). Equivalent elements in Figures 3A and 3B are referenced using identical numbers. Balanced coupling circuit 100' differs from balanced coupling circuit 100 in that a first network line capacitor 140B (Figure 3A) has been removed from balanced coupling circuit 100'. In addition, balanced coupling circuit 100' includes a second network line capacitor 140C, coupled in between a second terminal (not referenced) of network side winding 132 of first transformer 126 and second network port 110. As in Figure 3A, second network line capacitor 140C along with a center tap capacitor 140A are installed for meeting safety regulations.

Reference is now made to Figure 3C, which is a schematic illustration of a further balanced coupling circuit, generally referenced 100", for inductively coupling a PLC modem to a power line network, constructed and operative in accordance with a further embodiment of the disclosed technique. Balanced coupling circuit 100" is substantially similar to balanced coupling circuit 100' (Figure 3B). Equivalent elements in Figures 3B and 3C are referenced using identical numbers. Balanced coupling circuit 100" differs from balanced coupling circuit 100' in that both first network line 120 and second network line 122 include respective first network line and second network line capacitors 140B and 140C and that a center tap capacitor 140A has been removed. Therefore in Figure 3C, a center tap 138 directly couples a network side winding 132 of a first transformer 126 with a second terminal 144 of a network side winding 136 of a second transformer 128. First network line capacitor 140B is coupled between a first network port 108 and a first terminal (not referenced) of network side winding 132 of first transformer 126. Second network line capacitor 140C is coupled between a second network port 110 and a second terminal (not referenced) of network side winding 132 of first transformer 126. As mentioned above, first network line and second network line capacitors 140B and 140C are installed for meeting safety regulations.

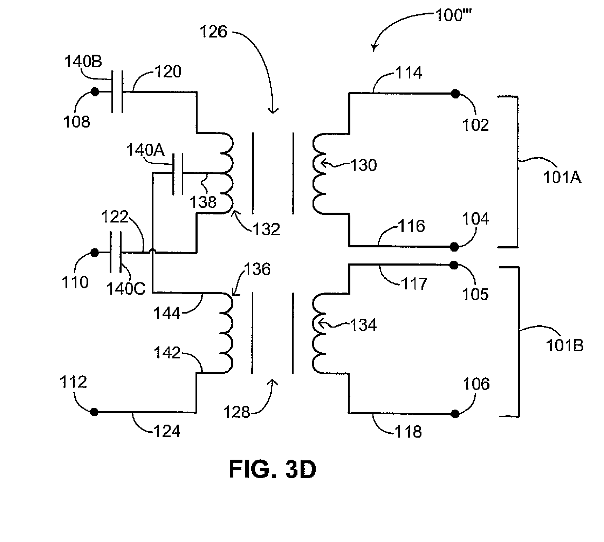

Reference is now made to Figure 3D, which is a schematic illustration of an additional balanced coupling circuit, generally referenced 100"', for inductively coupling a PLC modem to a power line network, constructed and operative in accordance with another embodiment of the disclosed technique. Balanced coupling circuit 100"' is substantially similar to balanced coupling circuits 100 (Figure 3A), 100' (Figure 3B) and 100" (Figure 3C). Equivalent elements in Figures 3A, 3B and 3C are referenced using identical numbers. Balanced coupling circuit 100"' includes a center tap capacitor 140A, a first network line capacitor 140B and a second network line capacitor 140C, each positioned in balanced coupling circuit 100"' in a manner similar to their respective positions in Figures 3A-3C. As mentioned above, center tap capacitor 140A, first network line capacitor 140B and second network line capacitor 140C are installed for meeting safety regulations.

It is noted that each of the embodiments of the balanced coupling circuit of the disclosed technique, as shown above in Figures 3A, 3B, 3C and 3D, may be enclosed within a PLC modem (not shown). Therefore, balanced coupling circuits 100, 100', 100" and 100"' may each be embodied as part of a PLC modem. Such a PLC modem would have one side which would couple it to the power line network via first network port 108, second network port 110 and third network port 112. Such a PLC modem could also optionally have another side which would couple it to an electrical device, such as a computer (not shown) or a printer (not shown), via first differential modem port 101A and second differential modem port 101B.

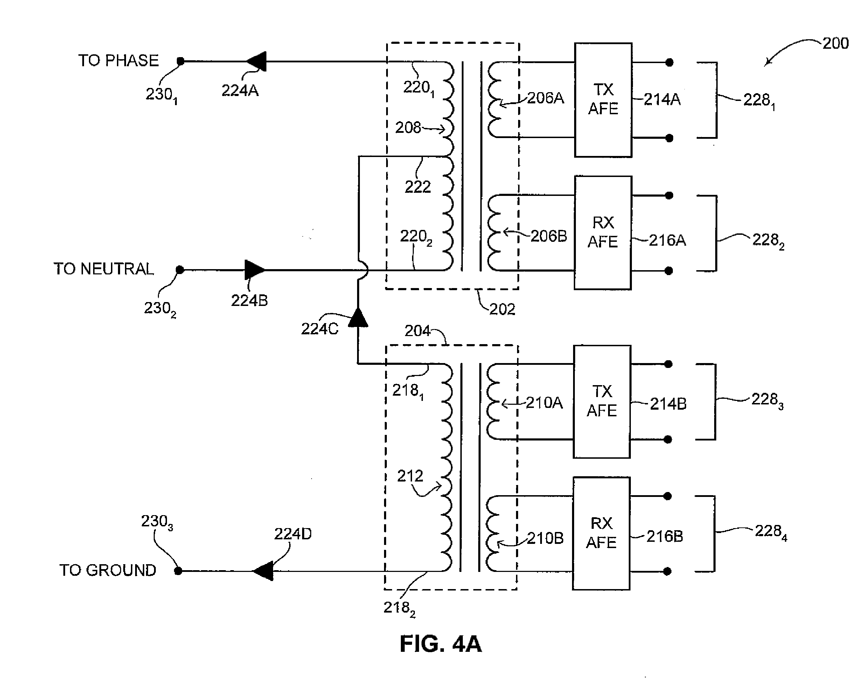

Reference is now made Figure 4A, which is a schematic illustration of a balanced coupling circuit for inductively coupling a PLC modem to a power line network including a transmitter section and a receiver section, generally referenced 200, constructed and operative in accordance with a further embodiment of the disclosed technique. Unlike the examples of balanced coupling circuits 100, 100', 100" and 100"' (respectively Figures 3A-3D), where a first differential modem port 101A (Figures 3A-3D) and a second differential modem port 101B (Figures 3A-3D) are shown for receiving signals over a power line network, balanced coupling circuit 200 shows four differential modem ports for receiving and transmitting signals over a power line network. The interface setup (i.e., the setup of coupling circuit 200) shown in Figure 4A is substantially similar to the interface, or coupling circuit setups of Figures 3A-3D except that Figure 4A shows an interface which includes both a receiver and a transmitter for receiving and transmitting over a PLC network. Balanced coupling circuit 200 includes a first transformer 202 and a second transformer 204. First transformer 202 and second transformer 204 inductively couple a PLC device (not shown) with a power line network (not labeled).

As shown, first transformer 202 includes a modem side (not labeled) and a network side (not labeled). The modem side includes a first modem side transmitter (herein abbreviated TX) winding 206A and a first modem side receiver (herein abbreviated RX) winding 206B, for coupling first transformer 202 with the PLC device. The network side includes a first network side winding 208, for coupling first transformer 202 with the power line network. First modem side TX winding 206A is coupled with a transmitter analog front end (herein abbreviated TX AFE) 214A for transmitting signals over the power line network. First modem side RX winding 206B is coupled with a receiver analog front end (herein abbreviated RX AFE) 216A for receiving signals over the power line network. TX AFE 214A may also be coupled with a line driver (not shown), an amplifier (not shown) and the like. RX AFE 216A may also be coupled with at least one filter (not shown), such as an analog filter, and the like. TX AFE 214A is coupled with a first differential modem port 228₁. RX AFE 216A is coupled with a second differential modem port 228₂. Both of first modem side TX winding 206A and first modem side RX winding 206B are symmetrically coupled with first network side winding 208. It is noted that in another embodiment of the disclosed technique, the modem side of first transformer 202 includes only one winding (not shown). In such an embodiment, TX AFE 214A and RX AFE 216A are both coupled with the one winding for both transmitting and receiving signals over a PLC network. First differential modem port 228₁ and second differential modem port 228₂ are coupled with the PLC device. First differential modem port 228₁ enables signals to be transmitted from the PLC device over a PN interface (as explained below) of the power line network. Second differential modem port 228₂ enables signals to be received by the PLC device from the power line network over the PN interface of the power line network.

First network side winding 208 includes a first terminal 220₁ and a second terminal 220₂. First terminal 220₁ couples first network side winding 208 with a phase line of the power line network, shown as a phase terminal 230₁. Second terminal 220₂ couples first network side winding 208 with a neutral line of the power line network, shown as a neutral terminal 230₂. In this respect, first network side winding 208 couples first transformer 202 to phase terminal 230₁ and neutral terminal 230₂ thus forming a phase-neutral (herein abbreviated PN) interface over which signals can be transmitted and received.

Second transformer 204 includes a modem side (not labeled) and a network side (not labeled). The modem side includes a second modem side TX winding 210A and a second modem side RX winding 210B, for coupling second transformer 204 with the PLC device. The network side includes a second network side winding 212, for coupling second transformer 204 with the power line network. Second modem side TX winding 210A is coupled with a TX AFE 214B for transmitting signals over the power line network. Second modem side RX winding 210B is coupled with an RX AFE 216B for receiving signals over the power line network. TX AFE 214B may also be coupled with a line driver (not shown), an amplifier (not shown) and the like. RX AFE 216B may also be coupled with at least one filter (not shown), such as an analog filter, and the like. TX AFE 214B is coupled with a third differential modem port 228₃. RX AFE 216B is coupled with a fourth differential modem port 228₄. Both of second modem side TX winding 210A and second modem side RX winding 210B are symmetrically coupled with second network side winding 212. It is noted that in another embodiment of the disclosed technique, the modem side of second transformer 204 includes only one winding (not shown). In such an embodiment, TX AFE 214B and RX AFE 216B are both coupled with the one winding for both transmitting and receiving signals over a PLC network. Third differential modem port 228₃ and fourth differential modem port 228₄ are coupled with the PLC device. Third differential modem port 228₃ enables signals to be transmitted from the PLC device over a PNG interface (as explained below) of the power line network. Fourth differential modem port 228₄ enables signals to be received by the PLC device from the power line network over the PNG interface of the power line network.

Second network side winding 212 includes a first terminal 218₁ and a second terminal 218₂. First terminal 218₁ couples second network side winding 212 with a midpoint 222 of first network side winding 208, as explained above in Figures 3A-3D. First terminal 218₁ couples second transformer 204 with first transformer 202 such that first terminal 218₁ is substantially coupled with a center tap (not labeled) of first transformer 202. Second terminal 218₂ couples second network side winding 212 with a ground line of the power line network, shown as a ground terminal 230₃. In this respect, second network side winding 212 couples second transformer 204 to ground terminal 230₃ and a midpoint between first terminal 220₁ and second terminal 220₂ of first transformer 202, thus forming a phase-neutral-ground (herein abbreviated PNG) interface over which signals can be transmitted and received. It is noted that coupling circuit 200 includes at least two capacitors (not shown) on the network side of first transformer 202 and second transformer 204. The possible positions of these at least two capacitors in Figure 4A are substantially equivalent to the various capacitor positions shown above in Figures 3A-3D. It is noted that other electrically equivalent positions of the at least two capacitors, besides those shown in Figures 3A-3D are possible and are within the knowledge of the worker skilled in the art. It is also noted that phase terminal 230₁, neutral terminal 230₂ and ground terminal 230₃ can be respectively referred to as a phase network port, a neutral network port and a ground network port.

The coupling circuit of the disclosed technique shown in Figure 4A is used for the simultaneous transmission of signals through two transmit ports (first differential modem port 228₁ and third differential modem port 228₃) and for the simultaneous reception of signals through two receive ports (second differential modem port 228₂ and fourth differential modem port 228₄). Each transmit and receive port forms a transmit and receive interface. These two transmit and receive interfaces use three network ports. A first receive and transmit interface (first differential modem port 228₁ and second differential modem port 228₂) uses two network ports, for example the phase port (shown as phase terminal 230₁) and the neutral port (shown as neutral terminal 230₂). In coupling circuit 200, the second transmit and receive interface (third differential modem port 228₃ and fourth differential modem port 228₄) requires the use of a third network port, such as the ground port (shown as ground terminal 230₃), since signals can not be transmitted and received simultaneously over two transmit ports having just two network ports for transmission. Thus a third network port is required. This second receive and transmit interface is coupled with coupling circuit 200 such that the symmetry between the two network ports of the first receive and transmit interface with respect to the third network port is maintained. Current being received over the ground wire (not labeled) is split, by the center tap coupling second transformer 204 with first transformer 202, to currents over phase terminal 230₁ and neutral terminal 230₂ which are substantially equal in magnitude and in polarity, such that no current is induced on first modem side RX winding 206B. The polarity is substantially equal in that current on the phase line (not labeled) and neutral line (not labeled) is either flowing away from first transformer 202 or flowing into first transformer 202. Such a current flow over the phase and neutral terminals results is substantially no current being induced on first modem side RX winding 206B. When signals are received by RX AFE 216B over the PNG interface, current from second network side winding 212 may travel in the direction of an arrow 224B over neutral terminal 230₂ and in the direction of an arrow 224D over ground terminal 230₃. The topology of coupling circuit 200 is such that signals received over the PNG interface travel from neutral terminal 230₂ to RX AFE 216B via the center tap (not labeled) of first transformer 202 which is coupled with midpoint 222 to second network side winding 212. This topology enables the PNG interface to prevent current from being induced on first modem side RX winding 206B.

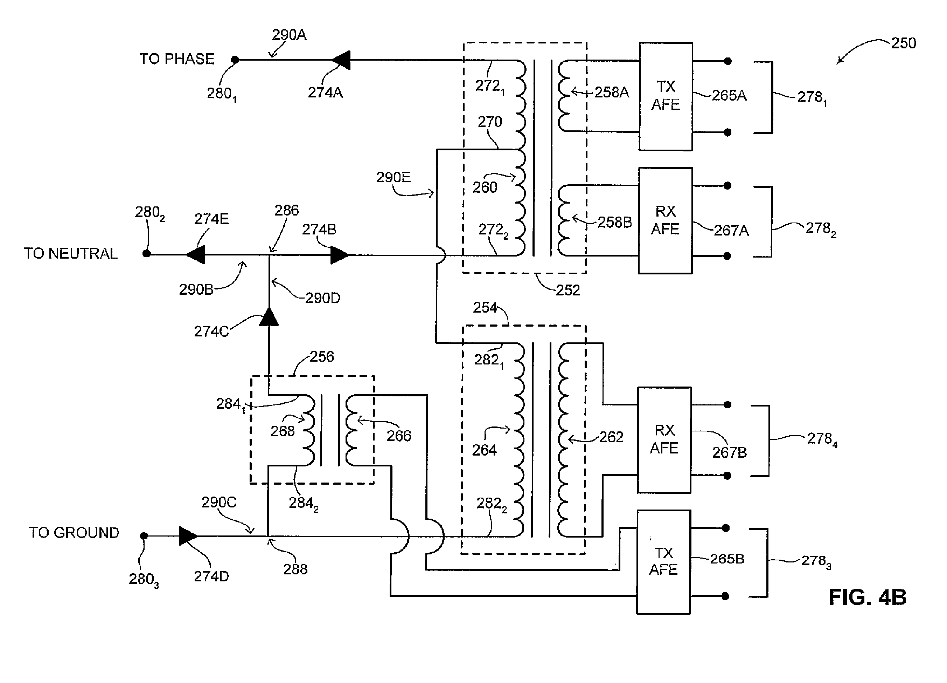

The coupling circuit shown in Figure 4A is balanced with regards to the PN interface but not with regards to the PNG interface. Thus signals transmitted over the PLC network in the interface setup of Figure 4A may suffer from excess levels of radiation. Signals transmitted over the PN interface via first network side winding 208 exhibit minimal levels of excess radiation and thus this interface is balanced. Excess radiation is any radiation emitted from the phase, neutral or ground lines above a predefined limit which may radiate off, or leak out of those power lines and interfere with signals and devices in the vicinity of those power lines. However, signals transmitted over the PNG interface via second network side winding 212 may exhibit higher levels of excess radiation which may cause interference and noise on signals and devices in the vicinity of coupling circuit 200. This is because signals transmitted by TX AFE 214B travel in the direction of an arrow 224C towards neutral terminal 230₂, with the current of the transmitted signal being split by the center tap such that a portion travels via neutral terminal 230₂ and another portion travels via phase terminal 230₁. Signals transmitted by TX AFE 214B via the PNG interface are not balanced since the magnitude of the current over neutral terminal 230₂ and ground terminal 230₃ is not substantially equivalent and the magnitude of the current over phase terminal 230₁ is not substantially zero. When transmitting signals via the PNG interface of Figure 4A, current leaks out of phase terminal 230₁ and may radiate in the air surrounding first transformer 202, thus potentially corrupting devices in the vicinity. This is due to the topology of coupling circuit 200. In general, excess radiation over pairs of wires can be minimized by balancing the magnitude of the current on each wire in a pair and minimizing the magnitude of the current on the third wire which is not part of the wire pair. In the interface setup of Figure 4A, the topology of TX AFE 214A is such that the current provided to first network side winding 208 is substantially balanced between phase terminal 230₁ and neutral terminal 230₂. Therefore signal transmissions over the PN interface are balanced and do not exhibit excess radiation over the phase and neutral lines. However, the topology of TX AFE 214B is such that the current provided to second network side winding 212 is unbalanced between neutral terminal 230₂ and ground terminal 230₃. The current induced in neutral terminal 230₂ is not at the same magnitude as the current induced in ground terminal 230₃ and the magnitude of the current induced in phase terminal 230₁ is not substantially zero. Therefore signal transmissions over the PNG interface are not balanced and thereby exhibit excess radiation over the phase, neutral and ground lines. According to the disclosed technique, the unbalanced current between the phase, neutral and ground lines can be balanced such that the symmetric characteristics of the receiving circuits of coupling circuit 200 are maintained. A coupling circuit, or interface setup, having both a balanced PN interface and a balanced NG interface is shown below in Figure 4B which maintains the symmetric characteristics of the receiving circuits of Figure 4A.

It is noted that Figure 4A shows three network side terminals, a phase terminal 230₁, a neutral terminal 230₂ and a ground terminal 230₃. According to the disclosed technique, the three network side terminals shown in Figure 4A are not limiting and are brought merely as an example. According to the disclosed technique, each of the terminals labeled 230₁, 230₂ and 230₃ may be coupled to respectively one of a phase line, a neutral line and a ground line. For example, terminal 230₁ may be a neutral terminal (not shown), terminal 230₂ may be a phase terminal (not shown) and terminal 230₃ may be a ground terminal (as shown). Terminal 230₁ may be a phase terminal (as shown), terminal 230₂ may be a ground terminal (not shown) and terminal 230₃ may be a neutral terminal (not shown). Terminal 230₁ may be a ground terminal (not shown), terminal 230₂ may be a neutral terminal (as shown) and terminal 230₃ may be a phase terminal (not shown). Terminal 230₁ may be a ground terminal (not shown), terminal 230₂ may be a phase terminal (not shown) and terminal 230₃ may be a neutral terminal (not shown). Terminal 230₁ may be a neutral terminal (not shown), terminal 230₂ may be a ground terminal (not shown) and terminal 230₃ may be a phase terminal (not shown).

Reference is now made to Figure 4B, which is a schematic illustration of another balanced coupling circuit for inductively coupling a PLC modem to a power line network including a transmitter section and a receiver section, generally referenced 250, constructed and operative in accordance with another embodiment of the disclosed technique. Like Figure 4A, Figure 4B shows a balanced coupling circuit with four differential modem ports for receiving and transmitting signals over a power line network. Balanced coupling circuit 250 includes a first transformer 252, a second transformer 254 and a third transformer 256. First transformer 252, second transformer 254 and third transformer 256 inductively couple a PLC device (not shown) with a power line network (not labeled).

As shown, first transformer 252 includes a modem side (not labeled) and a network side (not labeled). The modem side includes a first modem side TX winding 258A and a first modem side RX winding 258B, for coupling first transformer 252 with the PLC device. The network side includes a first network side winding 260, for coupling first transformer 252 with the power line network. First modem side TX winding 258A is coupled with a TX AFE 265A for transmitting signals over the power line network. First modem side RX winding 258B is coupled with an RX AFE 267A for receiving signals over the power line network. TX AFE 265A may also be coupled with a line driver (not shown), an amplifier (not shown) and the like. RX AFE 267A may also be coupled with at least one filter (not shown), such as an analog filter, and the like. TX AFE 265A is coupled with a first differential modem port 278₁. RX AFE 267A is coupled with a second differential modem port 278₂. Both of first modem side TX winding 258A and first modem side RX winding 258B are symmetrically coupled with first network side winding 260. It is noted that in another embodiment of the disclosed technique, the modem side of first transformer 252 includes only one winding (not shown). In such an embodiment, TX AFE 265Aand RX AFE 267A are both coupled with the one winding for both transmitting and receiving signals over a PLC network. First differential modem port 278₁ and second differential modem port 278₂ are coupled with the PLC device. First differential modem port 278₁ enables signals to be transmitted from the PLC device over a PN interface of the power line network, i.e. over a wire pair channel including a phase wire and a neutral wire. Second differential modem port 278₂ enables signals to be received by the PLC device from the power line network over the PN interface of the power line network.

First network side winding 260 includes a first terminal 272₁ and a second terminal 272₂. First terminal 272₁ couples first network side winding 260 with a phase line of the power line network, shown as a phase terminal 280₁. Second terminal 272₂ couples first network side winding 260 with a neutral line of the power line network, shown as a neutral terminal 280₂. In this respect, first network side winding 260couples first transformer 252 to phase terminal 280₁ and neutral terminal 280₂ thus forming a PN interface over which signals can be transmitted and received.

Second transformer 254 includes a modem side (not labeled) and a network side (not labeled). The modem side includes a second modem side RX winding 262, for coupling second transformer 254 with the PLC device. Unlike second transformer 204 (Figure 4A), second transformer 254 does not include a second mode side TX winding. The network side includes a second network side winding 264, for coupling second transformer 254 with the power line network. Second modem side RX winding 262 is coupled with an RX AFE 267B for receiving signals over the power line network. As described below, a TX AFE 265B is coupled with third transformer 256. TX AFE 265B may also be coupled with a line driver (not shown), an amplifier (not shown) and the like. RX AFE 267B may also be coupled with at least one filter (not shown), such as an analog filter, and the like. TX AFE 265B is coupled with a third differential modem port 278₃. RX AFE 267B is coupled with a fourth differential modem port 278₄. Third differential modem port 278₃ and fourth differential modem port 278₄ are coupled with the PLC device. Third differential modem port 278₃ enables signals to be transmitted from the PLC device over an NG interface (as explained below) of the power line network. Fourth differential modem port 278₄ enables signals to be received by the PLC device from the power line network over the NG interface of the power line network.

Second network side winding 264 includes a first terminal 282₁ and a second terminal 282₂. First terminal 282₁ couples second network side winding 264 with a midpoint 270 of first network side winding 260, as explained above in Figures 3A-3D and Figure 4A. First terminal 282₁ couples second transformer 254 with first transformer 252 such that first terminal 282₁ is substantially coupled with a center tap (not labeled) of first transformer 252. Second terminal 282₂ couples second network side winding 264 with a ground line of the power line network, shown as a ground terminal 280₃. In this respect, second network side winding 264 couples second transformer 254 to ground terminal 280₃ and a midpoint between first terminal 272₁ and second terminal 272₂ of first transformer 252, thus forming a PNG interface over which signals can be received.

Third transformer 256 includes a modem side (not labeled) and a network side (not labeled). The modem side includes a second modem side TX winding 266, for coupling third transformer 256 with the PLC device. The network side includes a third network side winding 268, for coupling third transformer 256 with the power line network. Second modem side TX winding 266 is coupled with TX AFE 265B. Third network side winding 268 includes a first terminal 284₁ and a second terminal 284₂. First terminal 284₁ couples third network side winding 268 with the neutral wire at a point 286. Second terminal 284₂ couples third network side winding 268 with a ground wire at a point 288. Third transformer 256 thus couples TX AFE 265B with neutral terminal 280₂ and ground terminal 280₃ thus forming an NG interface for transmitting signals over the power line network.

As shown, when signals are transmitted over the PN interface by TX AFE 265A, current is induced over phase terminal 280₁ in the direction of an arrow 274A and over network terminal 280₂ in the direction of an arrow 274B. Substantially no current is induced over ground terminal 280₃. Thus the PN interface of coupling circuit 250 is balanced. When signals are transmitted over the NG interface by TX AFE 265B, current is induced over network terminal 280₂ in the direction of arrows 274C and 274E and over ground terminal 280₃ in the direction of an arrow 274D. No current is induced over phase terminal 280₁. Thus the NG interface of coupling circuit 250 is also balanced with regards to transmitting signals over the PLC network. As shown, the coupling of the network sides of first transformer 252 and second transformer 254 are equivalent to the coupling of the network sides in coupling circuit 200 (Figure 4A) such that the behavior of RX AFE 267A and RX AFE 267B is equivalent to that of RX AFE 216A (Figure 4A) and RX AFE 216B (Figure 4A). In coupling circuit 250, signals are transmitted over a PN interface and an NG interface whereas signals are received over the PN interface and a PNG interface. Thus the setup of coupling circuit 250 maintains balanced PN and NG interfaces for transmitting signals as well. In the setup of Figure 4B, signals which are transmitted via TX AFE 265B bypass second transformer 254 and the center tap of first transformer 252. Signals which are transmitted via TX AFE 265B are transmitted directly over the neutral wire and the ground wire, thus over an NG interface. As shown, the topology of third transformer 256 enables any current representing a transmission on neutral terminal 280₂ and ground terminal 280₃ to be balanced. At the same time, the current of signals transmitted via TX AFE 265A remains balanced over phase terminal 280₁ and neutral terminal 280₂. In addition, signals received from the power line network to RX AFE 267A via the PN interface and to RX AFE 267B via the PNG interface maintain their symmetric characteristics as explained above in Figure 4A. The coupling circuit of Figure 4B thus enables a PLC device to be coupled with a power line network wherein the PN and NG interfaces for transmission are balanced in terms of the magnitude of the current induced over each wire in the phase-neutral wire pair and the neutral-ground wire pair. The balanced current thus enables signals to be transmitted over the PN and NG interfaces with minimal excess of radiation leaking out of the phase, neutral and ground wires which could potentially interfere with other devices in the vicinity.

It is noted that coupling circuit 250 includes at least two capacitors, similar to the capacitors mentioned above in Figure 4A and shown above in Figures 3A-3D. The various possibilities of the positioning of the at least two capacitors in coupling circuit 250 are shown in Figure 4B via a plurality of arrows 290A-290E, wherein each arrow demarcates a particular location in coupling circuit 250 where a capacitor can be placed. Arrow 290A represents a position on the phase line between first terminal 272₁ and phase terminal 280₁. Arrow 290B represents a position on the neutral line between second terminal 272₂ and neutral terminal 280₂ after the coupling of third transformer 256 to the neutral line, i.e. between point 286 where third transformer 256 is coupled with the neutral line and neutral terminal 280₂. Arrow 290C represents a position on the ground line between ground terminal 280₃ and after the coupling of third transformer 256 to the ground line, i.e. between point 288 where third transformer 256 is coupled with the ground line and ground terminal 280₃. Arrow 290D represents a position on a line (not labeled) between first terminal 284₁ and a coupling of third transformer 256 to the neutral line. Arrow 290E represents a position on a line (not labeled) between first terminal 282₁ and the center tap of first network side winding 260. In a preferred embodiment of the disclosed technique, two capacitors are positioned, a first where arrow 290A indicates and a second where arrow 290B indicates. In another embodiment of the disclosed technique, two capacitors are positioned, a first where arrow 290B indicates and a second where arrow 290C indicates. In a further embodiment of the disclosed technique, three capacitors are positioned, a first where arrow 290A indicates, a second where arrow 290D indicates and a third where arrow 290E indicates. In another embodiment of the disclosed technique, three capacitors are positioned, a first where arrow 290B indicates, a second where arrow 290D indicates and a third where arrow 290E. In a further embodiment of the disclosed technique, three capacitors are positioned, a first where arrow 290A indicates, a second where arrow 290B indicates and a third where arrow 290E indicates. It is noted that other electrically equivalent possibilities exist for the positioning of the at least two capacitors in coupling circuit 250 and are within the knowledge of the worker skilled in the art.

It is noted that Figure 4B shows three network side terminals, a phase terminal 280₁, a neutral terminal 280₂ and a ground terminal 280₃. According to the disclosed technique, the three network side terminals shown in Figure 4B are not limiting and are brought merely as an example. According to the disclosed technique, each of the terminals labeled 280₁, 280₂ and 280₃ may be coupled to respectively one of a phase line, a neutral line and a ground line. For example, terminal 280₁ may be a neutral terminal (not shown), terminal 280₂ may be a phase terminal (not shown) and terminal 280₃ may be a ground terminal (as shown). Terminal 280₁ may be a phase terminal (as shown), terminal 280₂ may be a ground terminal (not shown) and terminal 280₃ may be a neutral terminal (not shown). Terminal 280₁ may be a ground terminal (not shown), terminal 280₂ may be a neutral terminal (as shown) and terminal 280₃ may be a phase terminal (not shown). Terminal 280₁ may be a ground terminal (not shown), terminal 280₂ may be a phase terminal (not shown) and terminal 280₃ may be a neutral terminal (not shown). Terminal 280₁ may be a neutral terminal (not shown), terminal 280₂ may be a ground terminal (not shown) and terminal 280₃ may be a phase terminal (not shown).

It will be appreciated by persons skilled in the art that the disclosed technique is not limited to what has been particularly shown and described hereinabove. Rather the scope of the disclosed technique is defined only by the claims, which follow.

## Claims

1. Coupling circuit for coupling a power line communication device to a power line network, comprising:
a first network port, coupled with a first network line;
a second network port, coupled with a second network line;
a third network port, coupled with a third network line;
a first differential modem port;
a second differential modem port;
a third differential modem port;
a fourth differential modem port;
a first transformer, comprising:
a first network side winding, said first network side winding comprising two terminals;
a first modem side transmitter (TX) winding, said first modem side TX winding comprising two terminals;
a first modem side receiver (RX) winding, said first modem side RX winding comprising two terminals; and
a center tap, extending from a midpoint between said two terminals of said first network side winding,
said first modem side TX winding coupled with said first differential modem port, said first modem side RX winding coupled with said second differential modem port, a first one of said two terminals of said first network side winding coupled with said first network line and a second one of said two terminals of said first network side winding coupled with said second network line;
a second transformer, comprising:
a second network side winding, said second network side winding comprising two terminals; and
a second modem side RX winding, said second modem side RX winding comprising two terminals,
said second modem side RX winding coupled with said fourth differential modem port, a first one of said two terminals of said second network side winding coupled with said center tap and a second one of said two terminals of said second network side winding coupled with said third network line;
a third transformer, comprising:
a third network side winding, said third network side winding comprising two terminals; and
a second modem side TX winding, said second modem side TX winding comprising two terminals,
said second modem side TX winding coupled with said third differential modem port, a first one of said two terminals of said third network side winding coupled with said second network line and a second one of said two terminals of said third network side winding coupled with said third network line,
and
at least two capacitors.

2. The coupling circuit according to claim 1, wherein said first network line and said second network line form a network phase-neutral (PN) interface, wherein said second network line and said third network line form a network neutral-ground (NG) interface, wherein said network PN interface is balanced and wherein said network NG interface is balanced.

3. The coupling circuit according to claim 1, wherein said first network line and said second network line form a network neutral-phase (NP) interface, wherein said second network line and said third network line form a network phase-ground (PG) interface, wherein said network NP interface is balanced and wherein said network PG interface is balanced.

4. The coupling circuit according to claim 1, wherein a first one of said at least two capacitors is coupled between said first network port and a first one of said two terminals of said first network side winding and wherein a second one of said at least two capacitors is coupled between said second network port and said coupling of said third transformer with said second network line.

5. The coupling circuit according to claim 1, wherein a first one of said at least two capacitors is coupled between said second network port and said coupling of said third transformer with said second network line and wherein a second one of said at least two capacitors is coupled between said third network port and said coupling of said third transformer with said third network line.

6. The coupling circuit according to claim 1, wherein a first one of said at least two capacitors is coupled between said first network port and a first one of said two terminals of said first network side winding, wherein a second one of said at least two capacitors is coupled between said first one of said two terminals of said third network side winding and said second network line and wherein a third one of said at least two capacitors is coupled between said first one of said two terminals of said second network side winding and said center tap.

7. The coupling circuit according to claim 1, wherein a first one of said at least two capacitors is coupled between said second network port and said coupling of said third transformer with said second network line, wherein a second one of said at least two capacitors is coupled between said first one of said two terminals of said third network side winding and said second network line and wherein a third one of said at least two capacitors is coupled between said first one of said two terminals of said second network side winding and said center tap.

8. The coupling circuit according to claim 1, wherein a first one of said at least two capacitors is coupled between said first network port and a first one of said two terminals of said first network side winding, wherein a second one of said at least two capacitors is coupled between said second network port and said coupling of said third transformer with said second network line and wherein a third one of said at least two capacitors is coupled between said first one of said two terminals of said second network side winding and said center tap.

9. Power line communication device comprising a coupling circuit according to claim 1.

10. Coupling circuit for coupling a power line communication device to a power line network, comprising:
a first network port, coupled with a first network line;
a second network port, coupled with a second network line;
a third network port, coupled with a third network line;
a first differential modem port;
a second differential modem port;
a third differential modem port;
a fourth differential modem port;
a first transformer, comprising:
a first network side winding, said first network side winding comprising two terminals;
a first modem side winding, said first modem side winding comprising two terminals; and
a center tap, extending from a midpoint between said two terminals of said first network side winding,
said first modem side winding coupled with said first differential modem port and with said second differential modem port, a first one of said two terminals of said first network side winding coupled with said first network line and a second one of said two terminals of said first network side winding coupled with said second network line, wherein one of said first and second differential modem ports is for transmitting at least one signal over said power line network and wherein the other one of said first and second differential modem ports is for receiving said at least one signal over said power line network;
a second transformer, comprising:
a second network side winding, said second network side winding comprising two terminals; and
a second modem side receiver (RX) winding, said second modem side RX winding comprising two terminals,
said second modem side RX winding coupled with said fourth differential modem port, a first one of said two terminals of said second network side winding coupled with said center tap and a second one of said two terminals of said second network side winding coupled with said third network line;
a third transformer, comprising:
a third network side winding, said third network side winding comprising two terminals; and
a second modem side transmitter (TX) winding, said second modem side TX winding comprising two terminals,
said second modem side TX winding coupled with said third differential modem port, a first one of said two terminals of said third network side winding coupled with said second network line and a second one of said two terminals of said third network side winding coupled with said third network line,
and
at least two capacitors.

11. Coupling circuit for coupling a power line communication device to a power line network, comprising:
a first network port, coupled with a first network line;
a second network port, coupled with a second network line;
a third network port, coupled with a third network line;
a first differential modem port;
a second differential modem port;
a third differential modem port;
a fourth differential modem port;
a first transformer, comprising:
a first network side winding, said first network side winding comprising two terminals;
a first modem side transmitter (TX) winding, said first modem side TX winding comprising two terminals;
a first modem side receiver (RX) winding, said first modem side RX winding comprising two terminals; and
a center tap, extending from a midpoint of said first network side winding,
said first modem side TX winding coupled with said first differential modem port, said first modem side RX winding coupled with said second differential modem port, a first one of said two terminals of said first network side winding coupled with said first network line and a second one of said two terminals of said first network side winding coupled with said second network line;
a second transformer, comprising:
a second network side winding, said second network side winding comprising two terminals;
a second modem side TX winding, said second modem side TX winding comprising two terminals; and
a second modem side RX winding, said second modem side RX winding comprising two terminals,
said second modem side TX winding coupled with said third differential modem port, said second modem side RX winding coupled with said fourth differential modem port, a first one of said two terminals of said second network side winding coupled with said center tap and a second one of said two terminals of said second network side winding coupled with said third network line,
and
at least two capacitors, coupled between at least any two of:
said midpoint of said first network side winding and said first one of said two terminals of said second network side winding;
a first one of said two terminals of said first network side winding and said first network port; and
a second one of said two terminals of said first network side winding and said second network port.

12. The coupling circuit according to claim 11, wherein said first network line and said second network line form a network phase-neutral (PN) interface and wherein said network PN interface is balanced.

13. Power line communication device comprising a coupling circuit according to claim 11.

14. Coupling circuit for coupling a power line communication device to a power line network, comprising:
a first network port, coupled with a first network line;
a second network port, coupled with a second network line;
a third network port, coupled with a third network line;
a first differential modem port;
a second differential modem port;
a third differential modem port;
a fourth differential modem port;
a first transformer, comprising:
a first network side winding, said first network side winding comprising two terminals;
a first modem side winding, said first modem side winding comprising two terminals; and
a center tap, extending from a midpoint of said first network side winding,
said first modem side winding coupled with said first differential modem port and with said second differential modem port, a first one of said two terminals of said first network side winding coupled with said first network line and a second one of said two terminals of said first network side winding coupled with said second network line, wherein one of said first and second differential modem ports is for transmitting at least one signal over said power line network and wherein the other one of said first and second differential modem ports is for receiving said at least one signal over said power line network;
a second transformer, comprising:
a second network side winding, said second network side winding comprising two terminals; and
a second modem side winding, said second modem side winding comprising two terminals;
said second modem side winding coupled with said third differential modem port and with said fourth differential modem port, a first one of said two terminals of said second network side winding coupled with said center tap and a second one of said two terminals of said second network side winding coupled with said third network line, wherein one of said third and fourth differential modem ports is for transmitting at least one signal over said power line network and wherein the other one of said third and fourth differential modem ports is for receiving said at least one signal over said power line network;
and
at least two capacitors, coupled between at least any two of:
said midpoint of said first network side winding and said first one of said two terminals of said second network side winding;
a first one of said two terminals of said first network side winding and said first network port; and
a second one of said two terminals of said first network side winding and said second network port.

15. Coupling circuit for coupling a power line communication device to a power line network, comprising:
a first network port, coupled with a first network line;
a second network port, coupled with a second network line;
a third network port, coupled with a third network line;
a first differential modem port;
a second differential modem port;
a third differential modem port;
a fourth differential modem port;
a first transformer, comprising:
a first network side winding, said first network side winding comprising two terminals;
a first modem side winding, said first modem side winding comprising two terminals; and
a center tap, extending from a midpoint of said first network side winding,
said first modem side winding coupled with said first differential modem port and with said second differential modem port, a first one of said two terminals of said first network side winding coupled with said first network line and a second one of said two terminals of said first network side winding coupled with said second network line, wherein one of said first and second differential modem ports is for transmitting at least one signal over said power line network and wherein the other one of said first and second differential modem ports is for receiving said at least one signal over said power line network;
a second transformer, comprising:
a second network side winding, said second network side winding comprising two terminals;
a second modem side transmitter (TX) winding, said second modem side TX winding comprising two terminals; and
a second modem side receiver (RX) winding, said second modem side RX winding comprising two terminals,
said second modem side TX winding coupled with said third differential modem port, said second modem side RX winding coupled with said fourth differential modem port, a first one of said two terminals of said second network side winding coupled with said center tap and a second one of said two terminals of said second network side winding coupled with said third network line,
and
at least two capacitors, coupled between at least any two of:
said midpoint of said first network side winding and said first one of said two terminals of said second network side winding;
a first one of said two terminals of said first network side winding and said first network port; and
a second one of said two terminals of said first network side winding and said second network port.

16. Coupling circuit for coupling a power line communication device to a power line network, comprising:
a first network port, coupled with a first network line;
a second network port, coupled with a second network line;
a third network port, coupled with a third network line;
a first differential modem port;
a second differential modem port;
a third differential modem port;
a fourth differential modem port;
a first transformer, comprising:
a first network side winding, said first network side winding comprising two terminals;
a first modem side transmitter (TX) winding, said first modem side TX winding comprising two terminals;
a first modem side receiver (RX) winding, said first modem side RX winding comprising two terminals; and
a center tap, extending from a midpoint of said first network side winding,
said first modem side TX winding coupled with said first differential modem port, said first modem side RX winding coupled with said second differential modem port, a first one of said two terminals of said first network side winding coupled with said first network line and a second one of said two terminals of said first network side winding coupled with said second network line;
a second transformer, comprising:
a second network side winding, said second network side winding comprising two terminals; and
a second modem side winding, said second modem side winding comprising two terminals;
said second modem side winding coupled with said third differential modem port and with said fourth differential modem port, a first one of said two terminals of said second network side winding coupled with said center tap and a second one of said two terminals of said second network side winding coupled with said third network line, wherein one of said third and fourth differential modem ports is for transmitting at least one signal over said power line network and wherein the other one of said third and fourth differential modem ports is for receiving said at least one signal over said power line network;
and
at least two capacitors, coupled between at least any two of:
said midpoint of said first network side winding and said first one of said two terminals of said second network side winding;
a first one of said two terminals of said first network side winding and said first network port; and
a second one of said two terminals of said first network side winding and said second network port.

17. The coupling circuit according to any one of claims 1, 10, 11, 14, 15 and 16, wherein said first network line, said second network line and said third network line are coupled with said power line network and are selected from the list consisting of:
said first network line being a phase line, said second network line being a neutral line and said third network line being a ground line;
said first network line being a phase line, said second network line being a ground line and said third network line being a neutral line;
said first network line being a neutral line, said second network line being a phase line and said third network line being a ground line;
said first network line being a neutral line, said second network line being a ground line and said third network line being a phase line;
said first network line being a ground line, said second network line being a neutral line and said third network line being a phase line; and
said first network line being a ground line, said second network line being a phase line and said third network line being a neutral line.
